# EUROPÄISCHE PATENTANMELDUNG

(11) **EP 4 275 928 A1**
(43) Veröffentlichungstag der Anmeldung: **15.11.2023**
(21) Anmeldenummer: 23172106.9
(22) Anmeldetag: 08.05.2023
(51) Int. Cl.: B60G 5/02, B60G 11/46, B60G 15/12, B60B 35/12

(54) **FAHRGESTELL FÜR EIN KRAFTFAHRZEUG**

(30) Priorität: 09.05.2022 AT 503242022
(71) Anmelder: Rehberger, Ingrid, 5143 Feldkirchen bei Mattighofen (AT)
(72) Erfinder: Gottfried, Anton Johann, 5143 Feldkirchen (AT)
(74) Vertreter: Hübscher & Partner Patentanwälte GmbH

(57) **Zusammenfassung**

Es wird ein Fahrgestell für ein Kraftfahrzeug mit wenigstens einer an einem Fahrgestellrahmen (1) angeordneten Tandemachse (2) beschrieben, die eine Achsbrücke (3) und zwei an den Enden der Achsbrücke (3) drehbar gelagerte Antriebskästen (4) mit je zwei angetriebenen Achsen (5) aufweist. Um das Fahrverhalten zu verbessern, wird vorgeschlagen, dass die Achsbrücke (3) gegenüber dem Fahrgestellrahmen (1) durch in Hochrichtung wirksame Druckfedern (15) und zu den Druckfedern (15) parallele Stoßdämpfer (17) federnd abgestützt ist und dass zwischen dem Fahrgestellrahmen (1) und der Achsbrücke (3) Stabilisatoren (9) zur Übertragung von zwischen der Achsbrücke (3) und dem Fahrgestellrahmen (1) auftretenden Längs- und Querkräfte vorgesehen sind.

## Beschreibung

Die Erfindung bezieht sich auf ein Fahrgestell für ein Kraftfahrzeug mit wenigstens einer an einem Fahrgestellrahmen angeordneten Tandemachse, die eine Achsbrücke und zwei an den Enden der Achsbrücke drehbar gelagerte Antriebskästen mit je zwei angetriebenen Achsen aufweist.

Um den Belastungsanforderungen insbesondere von Nutzfahrzeugen vorteilhaft zu genügen, kommen Tandemachsen zum Einsatz, die üblicherweise eine Achsbrücke mit zwei an ihren beiden Enden drehbar gelagerten Antriebskästen aufweisen (DE 10 2017 223 599 A1, DE10 2015 212 533 A1). Da die Antriebskästen voneinander unabhängig auf der Achsbrücke schwenkbar gelagert sind, die wie eine Starrachse mit dem Fahrgestellrahmen verschraubt wird, können die Räder der beiden symmetrisch in den Antriebskästen angeordneten Antriebsachsen allfälligen Bodenunebenheiten unter einem Verschwenken der Antriebskästen folgen, und zwar auf beiden Fahrzeugseiten voneinander unabhängig. Damit wird nicht nur eine bessere Bodenhaftung, sondern auch ein verbessertes Fahrverhalten erreicht, weil beim Überfahren einer Bodenunebenheit durch die Wippfunktion der Antriebskästen die Höhenverlagerung des Fahrgestellrahmens im Vergleich mit der Höhenverlagerung der Antriebsräder angenähert halbiert wird. Wegen des vergleichsweise rauen Fahrkomforts werden solche Tandemachsen allerdings überwiegend nur bei Nutzfahrzeugen für die Forst- und Holztechnik und bei Landmaschinen genützt.

Für Straßenfahrzeuge mit einer Tandemachse ist es bekannt (US 1 608 069 A), die starre Achsbrücke mit den beiden an den Enden der Achsbrücke drehbar gelagerten Antriebskästen für je zwei angetriebene Achsen gegenüber dem Fahrgestellrahmen durch Blattfedern abzustützen, die zwischen ihren beidseits der Achsbrücke vorgesehenen Anlenkstellen am Fahrgestellrahmen schubfest mit der Achsbrücke verbunden sind. Diese Blattfedern erlauben zwar eine Federung der Achsbrücke in Hochrichtung, doch bleibt die für eine gute Geländegängigkeit erforderliche Schwenkmöglichkeit der Achsbrücke um eine Fahrzeuglängsachse weitgehend beschränkt.

Um bei industriellen Fahrzeugen mit mehreren Achsen Schwingungen zufolge von Fahrbahnunebenheiten in einfacher Art dämpfen zu können, ist es außerdem bekannt (EP 0 945 286 A1), zwei unmittelbar aufeinanderfolgende Achsen beidseitig miteinander durch je eine Schwinge zu verbinden und das mittige Lager der Schwingen unter Zwischenschaltung eines Dämpfungszylinders am Fahrgestellrahmen abzustützen. Die Führung der Schwingen durch Dämpfungszylinder schließt jedoch eine Schwenkbewegung der Achsen um eine Fahrzeuglängsachse aus.

Schließlich ist es bekannt (JP H07180181 A), die auf je einer Schwinge gelagerten Räder einer Tandemachse durch je einen Radmotor anzutreiben und die Drehschwingungen der beiden am Fahrgestell angelenkten Schwingen zu dämpfen. Zu diesem Zweck ist im Bereich eines Endes der beiden Schwingen ein um die Fahrzeuglängsachse verschwenkbar am Fahrgestell gelagerter, doppelarmiger Hebel vorgesehen, der mit seinen beiden Enden gegenüber den Schwingen federnd abgestützt ist, und zwar mithilfe eines am Ende jeder Schwinge vorgesehenen Federgehäuses, das mit zwei gegeneinander wirkenden Druckfedern versehen ist, zwischen denen das jeweilige Ende des doppelarmigen Hebels gehalten wird. Die Schwingen können daher gegenüber dem Fahrgestell nur eine Schwenkbewegung um eine Querachse, nämlich um ihre Anlenkachse, ausführen.

Der Erfindung liegt somit die Aufgabe zugrunde, ein Fahrgestell für ein Kraftfahrzeug mit einer Tandemachse so auszugestalten, dass nicht nur die Geländegängigkeit des Kraftfahrzeugs verbessert, sondern auch der Fahrkomfort erheblich gesteigert werden kann, ohne hierfür eine aufwendige Steuerung in Kauf nehmen zu müssen.

Ausgehend von einem Fahrgestell der eingangs geschilderten Art löst die Erfindung die gestellte Aufgabe dadurch, dass die Achsbrücke gegenüber dem Fahrgestellrahmen durch in Hochrichtung wirksame Druckfedern und zu den Druckfedern parallele Stoßdämpfer federnd abgestützt ist und dass zwischen dem Fahrgestellrahmen und der Achsbrücke Stabilisatoren zur Übertragung von zwischen der Achsbrücke und dem Fahrgestellrahmen auftretenden Längs- und Querkräfte vorgesehen sind.

Da die Achsbrücke nicht starr mit dem Fahrgestellrahmen verbunden, sondern gegenüber dem Fahrgestellrahmen durch Druckfedern in Richtung einer Hochachse federnd abgestützt ist, kann sich die Achsbrücke in Abhängigkeit von der jeweiligen Belastung zusätzlich gegen die Kraft der Druckfedern in einer Querebene gegenüber dem Fahrgestellrahmen bewegen, was einerseits mit einer den Fahrkomfort und das Fahrverhalten steigernden Federung und anderseits mit einer Verbesserung der Geländegängigkeit einhergeht, weil durch ein aufgrund der Druckfederabstützung ermöglichtes Verschwenken der Achsbrücke um eine Längsachse ein teilweiser Ausgleich unterschiedlicher Bodenhöhen auf den beiden Fahrzeugseiten erreicht werden kann. Die zu den Druckfedern parallelen Stoßdämpfer sorgen für eine entsprechende Schwingungsdämpfung.

Trotz der mithilfe der Druckfedern erreichbaren zusätzlichen Bewegungsfreiheit muss für eine entsprechende Übertragung der auftretenden Längs- und Querkräfte zwischen der Achsbrücke und dem Fahrgestellrahmen gesorgt werden. Hierfür werden in an sich bekannter weise Stabilisatoren eingesetzt.

Vorteilhafte Konstruktionsbedingungen ergeben sich, wenn die Druckfedern auf der Außenseite der Antriebskästen vorgesehen sind. In diesem Fall können günstige Hebelverhältnisse bei einer Drehmomentabstützung der Achsbrücke gegenüber dem Fahrgestellrahmen genützt werden. Sind die der Achsbrücke zugehörigen Widerlager für die Druckfedern ohne zusätzliche Konstruktionsmaßnahmen an den Antriebskästen vorgesehen, so werden die Antriebskästen beim Verschwenken durch die Druckfedern mit einem Rückstellmoment beaufschlagt. Soll dieses Rückstellmoment vermieden werden, müssen die Druckfedern ein der Achsbrücke zugeordnetes, gegenüber dem Antriebskasten um dessen Drehachse verschwenkbar gelagertes Widerlager aufweisen.

Die Druckfedern können als Schraubenfedern, insbesondere als kegelförmige Schraubenfedern für eine geringe Bauhöhe, ausgebildet sein. Besonders vorteilhafte Konstruktionsbedingungen ergeben sich allerdings, wenn die Druckfedern als Luftfederbälge ausgebildet sind, die nicht nur eine geringe Bauhöhe ermöglichen, sondern aufgrund der möglichen Steuerung der Druckluftbeaufschlagung eine weitgehende Anpassung an unterschiedliche Betriebsbedingungen erlauben.

Wie bereits ausgeführt wurde, sind zwischen dem Fahrgestellrahmen und der Achsbrücke Stabilisatoren zur Übertragung von Längs- und Querkräften erforderlich. Obwohl diese Stabilisatoren unterschiedlich ausgeführt sein können, ergeben sich besonders günstige Konstruktionsverhältnisse, wenn die Stabilisatoren Blattfedern bilden, die zwischen ihren beidseits der Achsbrücke vorgesehenen Anlenkstellen am Fahrgestellrahmen schubfest mit der Achsbrücke verbunden sind. Diese je nach den zu berücksichtigenden Belastungsfällen auszuführenden, üblicherweise mehrlagigen Blattfedern haben den Vorteil, dass sie sowohl Längskräfte in Blattlängsrichtung als auch wegen der Blattform Querkräfte aufnehmen können, und zwar bei einer für die Bewegung der Achsbrücke wesentlichen, federnden Nachgiebigkeit in Wirkrichtung der Druckfedern. Da die Blattfedern vor allem als Stabilisatoren wirken sollen, kann ihr Beitrag zur Federung der Tandemachse vergleichsweise klein ausfallen.

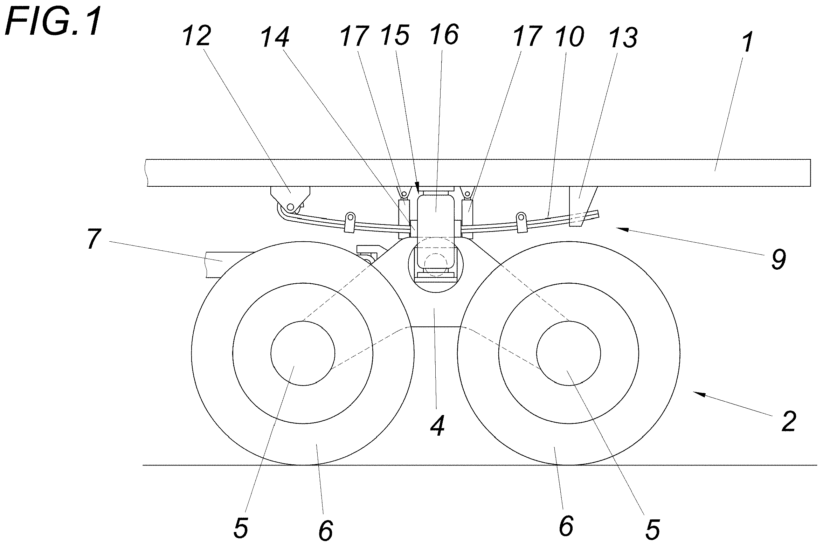

In der Zeichnung ist der Erfindungsgegenstand beispielsweise dargestellt. Es zeigen
Fig. 1 ein erfindungsgemäßes Fahrgestell ausschnittsweise im Bereich einer Tandemachse in einer schematischen Seitenansicht,

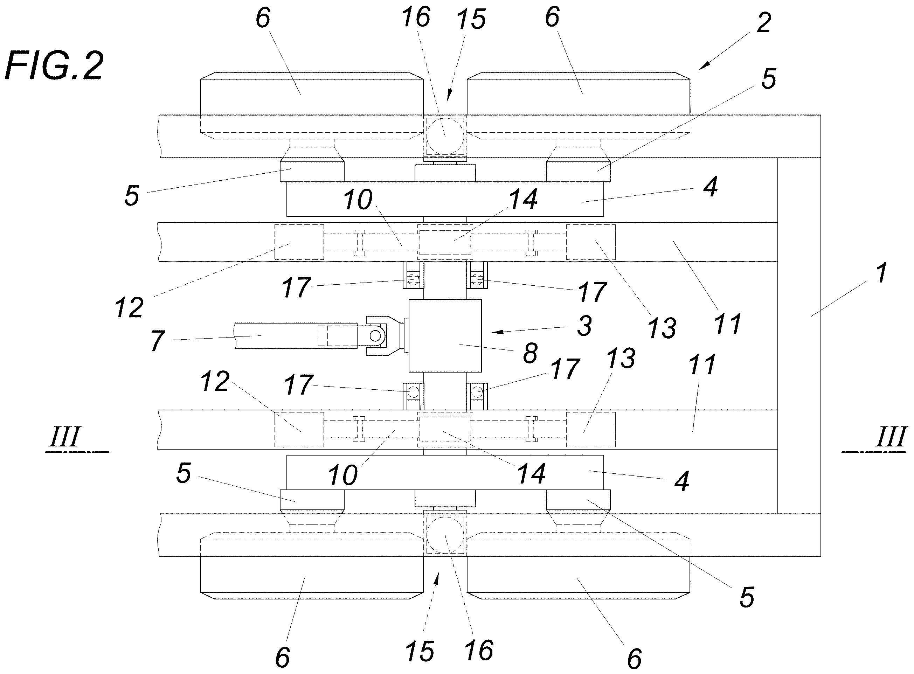

Fig. 2 die Tandemachse in einer Draufsicht auf den Fahrgestellrahmen,

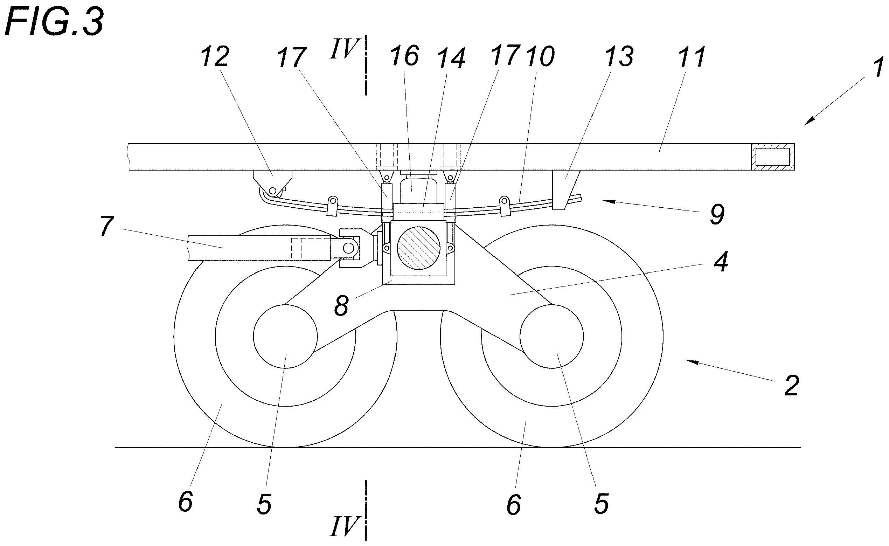

Fig. 3 einen Schnitt nach der Linie III-III der Fig. 2 und
Fig. 4 einen Schnitt nach der Linie IV-IV der Fig. 3.

Das dargestellte Fahrgestell eines Kraftfahrzeugs weist einen Fahrgestellrahmen 1 und eine Tandemachse 2 auf, die eine Achsbrücke 3 mit zwei an ihren Enden drehbar gelagerten Antriebskästen 4 für je zwei angetriebene Achsen 5 umfasst, deren Räder 6 gemäß dem Ausführungsbeispiel nicht lenkbar sind. Dies ist jedoch nicht zwingend, weil die Achsen 5 auch als Lenkachsen ausgeführt sein können. Der Antrieb der Räder 6 erfolgt über eine Kardanwelle 7, die ein in der Achsbrücke 3 vorgesehenes Planetengetriebe 8 antreibt, von dem Antriebswellen zu den um diese Antriebswellen drehbar gelagerten Antriebskästen 4 ausgehen. Die Antriebskästen 4 sind mit Ketten- oder Zahnradgetrieben zur Antriebsverbindung der Antriebswellen mit den angetriebenen Achsen 5 versehen.

Zur Abstützung der Achsbrücke 3 gegenüber dem Fahrgestellrahmen 1 sind Stabilisatoren 9, vorzugsweise in Form von mehrlagigen Blattfedern 10, vorgesehen. Für diese Blattfedern 10 sind an Längsträgern 11 des Fahrgestellrahmens 1 beidseits der Achsbrücke 3 Anlenkstellen 12, 13 vorgesehen, von denen eine Anlenkstelle 12 ein Festlager und die andere Anlenkstelle 13 ein Loslager bilden. Zwischen den beiden Anlenkstellen 12, 13 am Fahrgestellrahmen 1 sind die Blattfedern 10 durch eine Halterung 14 schubfest mit der Achsbrücke 3 verbunden. Mithilfe der Blattfedern 10 können somit Längs- und Querkräfte zwischen der Achsbrücke 3 und dem Fahrgestellrahmen 1 übertragen werden.

Die Achsbrücke 3 ist zusätzlich durch Druckfedern 15 in Richtung einer Hochachse, also quer zur Ebene des Fahrgestellrahmens 1, federnd gegenüber dem Fahrgestellrahmen 1 abgestützt. Die Druckfedern 15 sind obwohl nicht zwingend, jedoch vorteilhaft als Luftfederbälge 16 ausgebildet. Parallel zu diesen Luftfederbälgen 16 sind Stoßdämpfer 17 zwischen dem Fahrgestellrahmen 1 und der Achsbrücke 3 angeordnet. Die Luftfederbälge 16 ergeben somit in Verbindung mit den Stoßdämpfern 17 eine einfache und wirksame Federung für die Tandemachse 2, wobei zufolge dieser Federung im Zusammenwirken mit den Blattfedern 10 die Voraussetzungen für eine Verlagerung der Tandemachse 2 in einer Querebene entgegen einer Rückstellkraft geschaffen werden, was den Fahrkomfort und die Geländegängigkeit unter Ausnützung aller Vorteile solcher Tandemachsen erheblich verbessert.

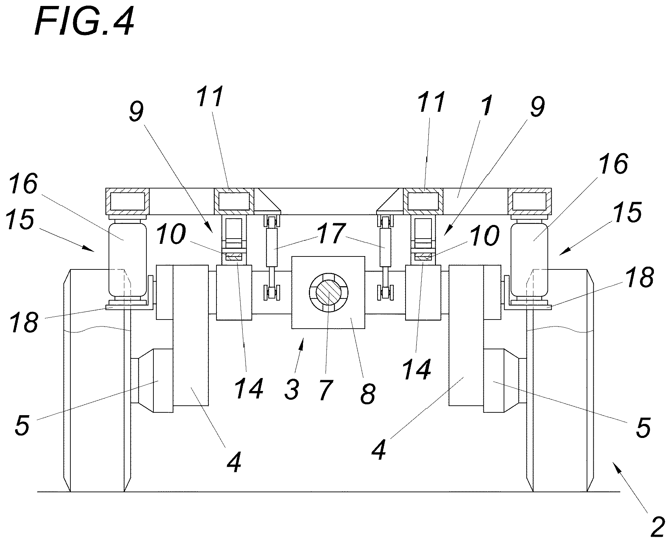

Wie insbesondere der Fig. 4 entnommen werden kann, sind die Luftfederbälge 16 auf der Außenseite der Antriebskästen 4 angeordnet, um vorteilhafte Hebelverhältnisse in Bezug auf die federnde Abstützung des Fahrgestellrahmens 1 gegenüber der Achsbrücke 3 sicherstellen zu können. Wegen des damit verbundenen Umstands, dass die achsseitigen Widerlager 18 der Luftfederbälge 16 kaum unmittelbar an der Achsbrücke 3 vorgesehen werden können, werden diese Widerlager 18 an der Außenseite der Antriebskästen 4 angeordnet, was eine drehbare Lagerung dieser Widerlager 18 um die Drehachse der Antriebskästen 4 bedingt, wenn beim Auslenken der Antriebskästen 4 Rückstellmomente durch die Druckfedern 15 vermieden werden sollen.

Es braucht wohl nicht besonders hervorgehoben zu werden, dass die Druckfedern 15 im Bedarfsfall auch gesperrt werden können, um beispielsweise Hangschrägfahrten zu erleichtern. Beim Einsatz von Luftfederbälgen 16 können in diesem Zusammenhang vorteilhafte Fahrbedingungen auch aufgrund einer unterschiedlichen Beaufschlagung der Luftfederbälge auf den einander gegenüberliegenden Fahrzeugseiten erreicht werden.

## Patentansprüche

1. Fahrgestell für ein Kraftfahrzeug mit wenigstens einer an einem Fahrgestellrahmen (1) angeordneten Tandemachse (2), die eine Achsbrücke (3) und zwei an den Enden der Achsbrücke (3) drehbar gelagerte Antriebskästen (4) mit je zwei angetriebenen Achsen (5) aufweist, **dadurch gekennzeichnet, dass** die Achsbrücke (3) gegenüber dem Fahrgestellrahmen (1) durch in Hochrichtung wirksame Druckfedern (15) und zu den Druckfedern (15) parallele Stoßdämpfer (17) federnd abgestützt ist und dass zwischen dem Fahrgestellrahmen (1) und der Achsbrücke (3) Stabilisatoren (9) zur Übertragung von zwischen der Achsbrücke (3) und dem Fahrgestellrahmen (1) auftretenden Längs- und Querkräfte vorgesehen sind.

2. Fahrgestell nach Anspruch 1, **dadurch gekennzeichnet, dass** die Druckfedern (15) auf der Außenseite der Antriebskästen (4) vorgesehen sind.

3. Fahrgestell nach Anspruch 2, **dadurch gekennzeichnet, dass** die Druckfedern (15) ein der Achsbrücke (3) zugeordnetes, gegenüber dem Antriebskasten (4) um dessen Drehachse verschwenkbar gelagertes Widerlager (18) aufweisen.

4. Fahrgestell nach einem der Ansprüche 1 bis 3, **dadurch gekennzeichnet, dass** die Druckfedern (15) als Luftfederbälge (16) ausgebildet sind.

5. Fahrgestell nach einem der Ansprüche 1 bis 3, **dadurch gekennzeichnet, dass** die Stabilisatoren(9) Blattfedern (10) bilden, die zwischen ihren beidseits der Achsbrücke (3) vorgesehenen Anlenkstellen (12, 13) am Fahrgestellrahmen (1) schubfest mit der Achsbrücke (3) verbunden sind.
